# EUROPEAN PATENT APPLICATION

(11) **EP 1 116 700 A1**
(43) Date of publication of application: **18.07.2001**
(21) Application number: 00128265.6
(22) Date of filing: 22.12.2000
(51) Int. Cl.: C03C 12/00, C03C 4/00, C03C 3/19, A01N 25/34, A01N 59/16

(54) **Antibacterial property imparting glass composition, and antibacterial polymer composite material and molded antibacterial polymer composite material using the same**

(30) Priority: 28.12.1999 JP 37557599; 26.09.2000 JP 2000292960
(71) Applicant: ISHIZUKA GARASU KABUSHIKI KAISHA, Nagoya-shi Aichi-ken (JP)
(72) Inventor: Nomura, Makio, c/o Ishizuka Garasu K.K., Nagoya-shi, Aichi (JP)
(74) Representative: TER MEER STEINMEISTER & PARTNER GbR

(57) **Abstract**

There is provided an antibacterial property imparting glass composition which has high antibacterial durability at a small added amount.

An antibacterial property imparting glass composition comprises 0.1-5.0% by weight of Ag₂O contained in a glass composition containing 30-60 mol% of P₂O₅, 2-40 mol% of B₂O₃, and 1-50 mol% of 1 or 2 or more selected from MgO, CaO and ZnO (water-resistance imparting component). In such the antibacterial property imparting glass composition, a water-resistance imparting component is contained in a glass composition at an amount of 1-50 mol%, it is possible to improve water-resistance while maintaining antibacterial imparting effect to the previous extent at a small amount to be added to a subject material to which antibacterial property should be added and, detergent-resistance is sufficiently retained and, in particular, sustained antibacterial effect is exerted in places of water circumstance such as a kitchen, a bath, a toilet and the like.

## Description

### FIELD OF THE INVENTION

The present invention relates to an antibacterial property imparting glass composition, and an antibacterial polymer composite material and a molded antibacterial polymer composite material using the same.

### BACKGROUND OF THE INVENTION

Hitherto, antibacterial resin products using an inorganic antibacterial agent, for example, silver-carrying zirconium phosphate, silver zeolite, a soluble glass and the like have been widely spread as a product in water circumstance.

In particular, a soluble glass refers collectively to glasses having the adjusted composition from a viewpoint of the physical and chemical properties of a glass so that the glass has the controlled dissolving rate, and soluble glasses containing a silver, copper or zinc compound having antibacterial property are known as a glass which can dissolve out the above silver, copper or zinc ion at the predetermined rate for a few hours to a few years. Dissolved out silver, copper and zinc ions are adsorbed on a cell membrane of bacteria or microorganism, or concentrated in the cells, which inhibits the growth of bacteria or microorganism and exertstheantibacterialactionbyso-calledoligodynamic action. This soluble glass is utilized in the all fields using an antibacterial agent and complexation with a synthetic resin product, a fiber product and the like is carried out. A variety of complxing methods are developed, and blending of a material before molding into a product and attachment of an antibacterial soluble glass to a product by post-processing are performed.

### OBJECTS OF THE INVENTION

A product in water circumstance containing the aforementioned inorganic antibacterial agent such as the soluble glass and the like (for example, antibacterial resin product) has many chances to contact with water and a detergent and, therefore, sustained antibacterial effect is difficult to retain. For that reason, a high added amount is required. When the added amount is increased, not only it becomes high cost economically but also a problem of discoloration due to silver and the like contained in an inorganic antibacterial agent arises and this is not preferable from a viewpoint of a product.

An object of the present invention is to provide an antibacterial property imparting glass composition, and an antibacterial polymer composite material and a molded antibacterial polymer composite material using the same, which have high antibacterial durability at a small added amount.

### SUMMARY OF THE INVENTION

In order to accomplish the aforementioned object, an antibacterial property imparting glass composition of the present invention is characterized in that Ag₂O is contained at an amount of 0.1-5.0% by weight in a glass composition containing 30-60 mol% of P₂O₅, 2-40 mol% of B₂O₃, and 1-50 mol% of 1 or 2 or more selected from MgO, CaO and ZnO.

### DETAILED DESCRIPTION OF THE INVENTION

The glass composition having the above essential features is generally a soluble glass and the Ag component contained in a glass composition (soluble glass) is dissolved out from a glass composition for imparting antibacterial property containing such the soluble glass at the predetermined rate for an arbitrary period of time and, whereby, it becomes possible to impart high antibacterial property to a subject material such as a resin and the like to which antibacterial property should be imparted due to the Ag component. In the aforementioned antibacterial property imparting glass composition of the present invention, since 1-50 mol% of 1 or 2 or more selected from MgO, CaO and ZnO (hereinafter, this is also referred to as water-resistance imparting component) are contained as a component for improving water-resistance, it is possible to improve water-resistance while maintaining the antibacterial property imparting effect to an extent similar to that of the previous ones at a small amount to be added to a subject material to which antibacterial property should be imparted and, in particular, sustained antibacterial property in water circumstance is improved. Furthermore, since the content of the water-resistance imparting component in the glass composition is 1-50 mol%, detergent-resistance is sufficiently retained and, in particular, sustained antibacterial effect is exerted at places where a detergent is frequently used, such as a kitchen, a bath, a toilet and the like.

In addition, when the content of a water-resistance imparting component in a glass composition is less than 1 mol%, water-resistance of a glass composition (soluble glass) can not be sufficiently obtained, and sustained antibacterial effect is lowered due to too great dissolution rate of the soluble glass in some cases. When the content of a water-resistance imparting component exceeds 50 mol%, a dissolution rate of a soluble glass in water is lowered, antibacterial effect of the antibacterial property imparting glass composition at a small added amount can not be expected. Conversely, a dissolution rate to a detergent is increased, antibacterial durability to a detergent can not be expected in some cases and its sustained antibacterial property is lowered in some cases. The content of a water-resistance imparting component is preferably 5-50 mol%, more preferably 25-50 mol%. Occasionally, the content of a water-resistance imparting component may be 1-25 mol%, or 5-24 mol%.

Next, critical meanings of each component contained in the aforementioned antibacterial property imparting glass composition will be explained below.

P₂O₅ is a main component for glass formation in a glass composition (soluble glass). When the content of P₂O₅ in a glass composition is less than 30 mol%, vitrification of a soluble glass becomes difficult in some cases. When the content of P₂O₅ exceeds 60 mol%, water-resistance of a glass composition is remarkably lowered in some cases and, when the antibacterial property imparting glass composition is finely-divided and complexed with a subject material such as a resin to which antibacterial property should be imparted, moisture-absorption characteristics are produced in a fine-grinding step and fine-grinding becomes impossible due to secondary aggregation in some cases. In addition, the content of P₂O₅ is preferably 35-60 mol%, more preferably 35-55 mol%.

B₂O₃ is a component for glass formation next to P₂O₅ in a glass composition (soluble glass). When the content of B₂O₃ is less than 2 mol%, a dissolution rate of a soluble glass is slow, and antibacterial effect at a small amount can not be expected in some cases. When the content of B₂O₃ exceeds 40 mol%, vitrification of a soluble glass becomes difficult in some cases. The content of B₂O₃ is preferably 5-35 mol%, more preferably 5-30 mol%.

Ag₂O is contained in the above glass composition at an amount of 0.1-5.0% by weight and this Ag₂O component is a main component for manifesting the antibacterial action. When the content of Ag₂O in a glass composition is less than 0.1% by weight, the antibacterial effect by addition of the antibacterial property imparting glass composition to a subject material to which antibacterial property should be imparted at a small amount can not be obtained in some cases. On the other hand, when the content of Ag₂O exceeds 5.0% by weight, discoloration is produced in a subject material to which antibacterial property should be imparted (antibacterial product as a result of complexation) in some cases. The content of Ag₂O in a glass composition is preferably 0.3-3.5% by weight, more preferably 0.5-3.0% by weight.

Al₂O₃ can be contained in the aforementioned glass composition in a range of 15 mol% or less (lower limit: 0.1 mol%). When Al₂O₃ is contained, water-resistance and detergent-resistance are further improved. When the content of Al₂O₃ exceeds 15 mol%, vitrification of a soluble glass becomes difficult in some cases. The content of Al₂O₃ is preferably 0.1-12 mol%.

1 or 2 or more selected from Li₂O, Na₂O and K₂O (hereinafter, also referred to as vitrification promoting components) can be contained in a range of 15 mol% or less (lower limit: 0.1 mol%). The aforementioned vitrification promoting component is for facilitating vitrification of a glass composition (soluble glass). However, when the content of this component exceeds 15 mol%, a dissolution rate of a glass composition (soluble glass) in water becomes fast and sustained antibacterial effect is lowered in some cases. The content of a vitrification promoting component in a glass composition is preferably 0.1-10 mol%.

An antibacterial property imparting glass composition having the aforementioned essential features is suitably finely-ground into a particle form and complexed with a subject material to which antibacterial property should be imparted such as a resin and the like. In this case, an average particle diameter can be 0.1-55 *µ* m. When an average particle diameter is less than 0.1 *µ* m, it becomes difficult to prepare and, when complexed with a subject material to which antibacterial property should be imparted, deviation is produced and complexation can not be uniformly performed in some cases. Therefore, antibacterial property imparting effect is lowered and performance of a subject material to which antibacterial property should be imparted (antibacterial product as a result of complexation) is reduced, in particular, in the deviation area. In addition, when an average particle diameter exceeds 55 *µ* m, the properties of a subject material to which antibacterial property should be imparted are reduced and appearances of a subject material to which antibacterial property should be imparted (antibacterial product) are deteriorated in some cases. An average particle diameter is preferably around 0.5-55 *µ* m.

An average particle diameter can be measured using a laser diffraction type granulometer. In this case, since a great difference is not produced between the diffraction behavior of incident laser light due to an aggregated particle and the diffraction behavior due to isolated primary particle by measurement of a laser diffraction type granulometer, whether a measured particle diameter is a particle diameter of the existing single primary particle or a particle diameter of aggregated secondary particle is not discriminated. Therefore, an average particle diameter measured by the above method is a value which reflects an average particle diameter of a secondary particle including an isolated and not aggregated primary particle in a broad sense.

Next, an antibacterial polymer composite material of the present invention is characterized in that complexation is performed by dispersing the aforementioned antibacterial property imparting glass composition in a polymer material substrate and/or fixing to the surface of the substrate. In such the antibacterial polymer composite material, even when an amount of an antibacterial property imparting glass composition to be added is small, in particular, sustained antibacterial effect is improved in places of water circumstance and, for example, an amount of an antibacterial property imparting glass composition to be complexed with the aforementioned substrate may be 0.01-1.0% by weight. When the complexing amount is less than 0.01% by weight, sustained antibacterial effect can not be obtained in some cases. On the other hand, when the amount exceeds 1 . 0% by weight, the properties of an antibacterial polymer composite material characteristic of a polymer material are lowered and appearances of an antibacterial polymer composite material are deteriorated in some cases. Additionally, a problem of high cost arises in some cases. The complexing amount is preferably 0.03-0.8% by weight, more preferably 0.1-0.8% by weight.

Such the antibacterial polymer composite material can be molded into the predetermined shape to obtain a molded antibacterial polymer composite material. In this case, the molded product can be constituted as a final molded product which is not assumed on remolding accompanied by softening or the polymer material substrate can be constituted as a transient molded product (so called master batch) which is used for softening and remolding into the predetermined secondary shape.

In addition, the aforementioned polymer material substrate is not particularly limited, but is preferably a substrate comprising a thermoplastic polymer, such as polypropylene, polyethylene, acrylbutadienestyrene, polyamide, polyester and the like.

### EXAMPLES

P₂O₅, B₂O₃, Al₂O₃, MgO, CaO, ZnO, Li₂O, Na₂O and K₂O are mixed so that they have an amount (mol%) shown in Table 1, and Ag₂O is further mixed therein at a ratio by weight (% by weight) shown in Table 1, which is melt in an electric furnace at 1300-1350°C for an hour. Thereafter, a melt glass is removed from the electric furnace and flown on a carbon plate to cool naturally. After allowing to cool, the glass was finely-divided into an average particle diameter of about 8 *µ* m using a roll crusher or a ball mill to obtain antibacterial property imparting glass compositions belonging to the present invention (samples A-F) and samples G-I as Comparative Examples.

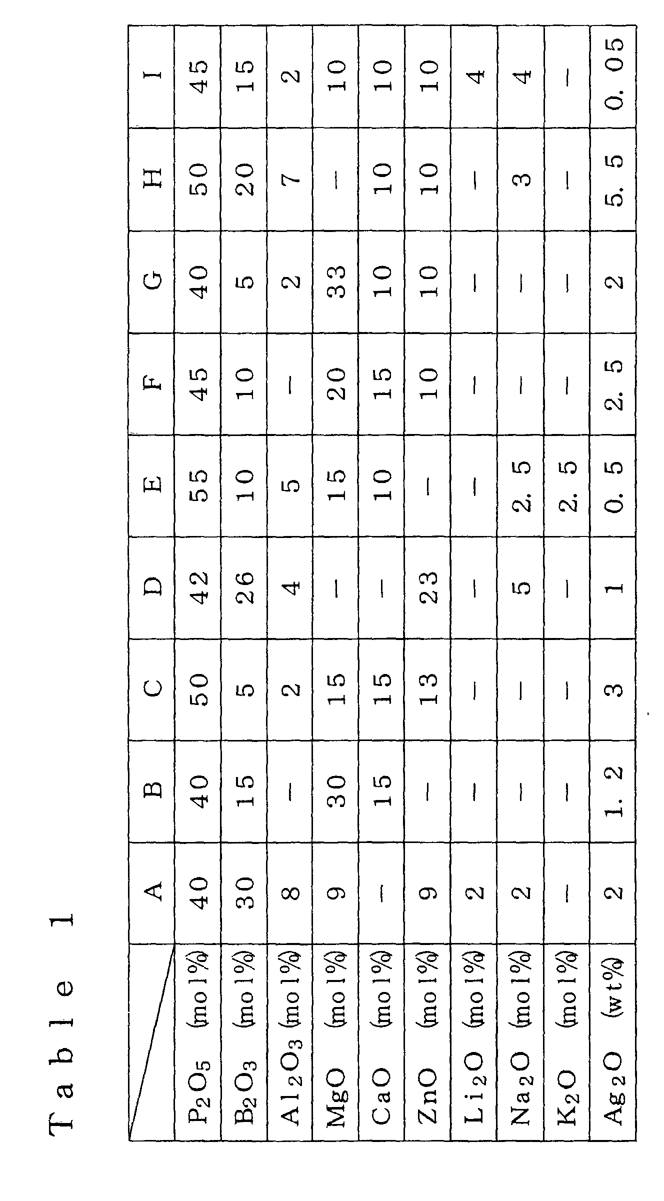

Resulting respective samples A-I and a polypropylene powder or pellet for a resin were mixed at an amount shown in Table 2 (Examples) and Table 3 (Comparative Examples) (0.1-1.5% by weight of each sample relative to a resin) and, thereafter, placed in an injection molding apparatus, which was injection-molded into a sample shape for an antibacterial test at 210°C. The shape of a sample for an antibacterial test was 98 mm in length, 48 mm in width and 2.0 mm in thickness.

The aforementioned sample for an antibacterial test was immersed in distilled water at 70°C for 100 hours and, thereafter, the immersion-treated sample was subjected to an antibacterial test by a film tightly attaching method. That is, 1/50 normal bouillon containing 10⁵ cells of Escherichia coli and Staphylococcus aureus was added dropwise to the immersion-treated sample, a film was contacted tightly thereon and, after allowed to stand at 35°C for 24 hours, the cells were washed out and cultured on SCD agar medium to count the number of living bacteria.

On the other hand, as a detergent-resistance test, the aforementioned sample for an antibacterial test was treated by immersing a commercially available synthetic detergent (trade name: Looktoile (manufactured by Lion)) at 25°C for 24 hours. Thereafter, the immersion-treated sample was subjected to an antibacterial test by a film tightly attaching method same as in the aforementioned water-resistance test.

Further, as a light discoloration-resistance test, a sample for an antibacterial test was irradiated with Xenon lamp at 450W/m² for 200 hours and a discoloration extent of the sample for an antibacterial test was measured as color difference (△E) with a spectrophotometer.

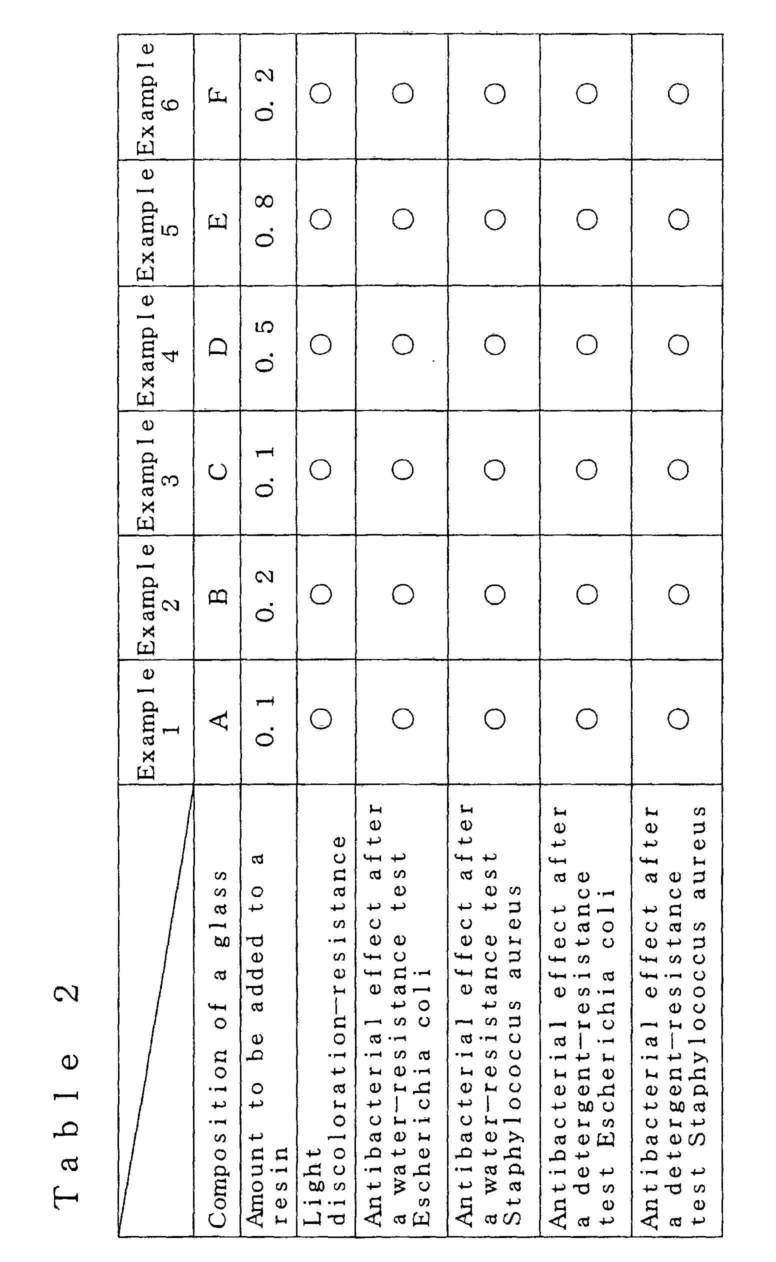

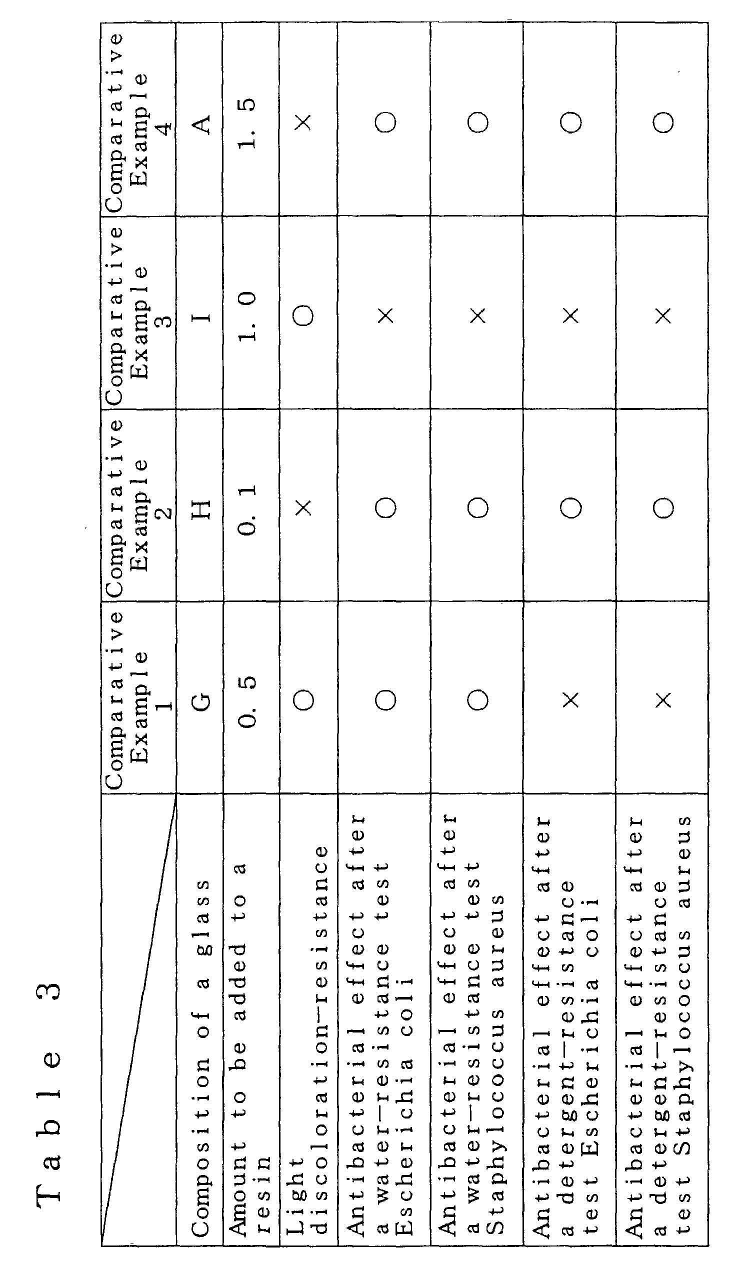

In an antibacterial test after a water-resistance test and a detergent-resistance test, the number of living bacteria of a polypropylene resin (standard sample) containing no antibacterial property imparting glass composition (samples A-I) counted by a film tightly attaching method is X and the number of living bacteria of samples of Examples and Comparative Examples is Y and, when a value of log (X/Y) is 2 or more, it was evaluated as ○ and, when a value of log (X/Y) is less than 2, it was evaluated as ×. In a light discoloration-resistance test, color difference (Δ E) before and after a test was measured and, when the difference is 1 or less, it was evaluated as ○ and, when the difference exceeds 1, it was evaluated as ×.

Examples 1-6 (see Table 2) in which antibacterial property imparting glass compositions (samples A-F) belonging to the present invention are added to (complexed with) a resin, respectively, showed the excellent effects in all of light discoloration-resistance, antibacterial effect after a water-resistance test and antibacterial effect after a detergent-resistance test. As shown in Examples 2, 3 and 6, when samples B, C and F containing neither of Li₂O, Na₂O nor K₂O are added as a glass composition to a resin, the excellent results were shown in all of light discoloration-resistance, antibacterial effect after a water-resistance test and antibacterial effect after a detergent-resistance test.

On the other hand, Comparative Examples 1-4 which are outside the present invention showed the inferior results in each test. Since a sample G (see Table 1) containing MgO, CaO and ZnO at a large amount (53 mol%) was used in Comparative Example 1, detergent-resistance was lowered and antibacterial effect after a detergent-resistance test became small.

Since a sample H (see Table 1) containing Ag₂O at a large amount (5.5% by weight) was used as a glass composition in Comparative Example 2, color difference (Δ E) was 1 or more in a light discoloration test. In addition, since a sample I (see Table 1) containing Ag₂O at a small amount amount (0.05% by weight) was used as a glass composition in Comparative Example 3, antibacterial effect became small.

Since an amount of a glass composition to be added to a resin is large (1.5% by weight) in Comparative Example 4, color difference (△ E) was 1 or more in a light discoloration-resistance test.

As used herein , "main component" means a component having the largest content by weight unless otherwise indicated.

## Claims

1. An antibacterial property imparting glass composition, which comprises 0.1-5.0% by weight of Ag₂O contained in a glass composition containing 30-60 mold of P₂O₅, 2-40 mol% of B₂O₃, and 1-50 mol% of 1 or 2 or more selected from MgO, CaO and ZnO.

2. The antibacterial property imparting glass composition according to claim 1, wherein Al₂O₃ is contained in the glass composition at an amount of 15 mol% or less.

3. The antibacterial property imparting glass composition according to claim 1 or 2, wherein 1 or 2 or more selected from Li₂O, Na₂O and K₂O are contained in the glass composition at an amount of 15 mol% or less.

4. The antibacterial property imparting glass composition according to any one of claims 1 to 3, wherein the glass composition is in the form of a particle having an average particle diameter of 0.1-55 *µ* m.

5. An antibacterial polymer composite material, which comprises the antibacterial property imparting glass composition as defined in any one of claims 1-4 which is complexed by dispersing in a polymer material substrate and/or fixing to the surface of the substrate.

6. The antibacterial polymer composite material according to claim 5, wherein the antibacterial property imparting glass composition is complexed with the polymer material substrate at a ratio of 0.01-1.0% by weight.

7. A molded antibacterial polymer composite material, which comprises the antibacterial polymer composite material as defined in claim 5 or 6, which is molded into the predetermined shape.
